# EUROPEAN PATENT APPLICATION

(11) **EP 4 683 077 A1**
(43) Date of publication of application: **21.01.2026**
(21) Application number: 25185871.8
(22) Date of filing: 27.06.2025
(51) Int. Cl.: H01M 50/296, B23K 9/32, B23K 9/10, H01M 50/247

(54) **BATTERY-POWERED WELDING-TYPE POWER SUPPLIES AND BATTERIES HAVING REMOVABLE BATTERY CONNECTORS**

(30) Priority: 28.06.2024 US 202463665734 P; 26.06.2025 US 202519251089
(71) Applicant: Illinois Tool Works Inc., Glenview IL 60025 (US)
(72) Inventor: MANTHE, Alan Adam, Glenview, 60025 (US); MUSKE, Mitchell James, Glenview, 60025 (US)
(74) Representative: HGF

(57) **Abstract**

Disclosed example battery-powered welding-type power supplies include: a housing (104) ; power conversion circuitry (110) within the housing and configured to convert input battery power to welding-type power; and a battery connector or the housing and configured to electrically couple a battery to the power conversion circuitry, the battery connector including: an internal electrical connector (158) integrally coupled within the housing to the power conversion circuitry; a mechanical connector (154) or the housing and configured to removably attach the battery to the housing; and a removable external electrical connector (156) configured to electrically couple the internal electrical connector to a corresponding battery electrical connector while the battery is attached to the housing.

## Description

### RELATED APPLICATIONS

The present application claims the benefit of U.S. Patent Application Serial No. 63/665,734, filed June 28, 2025, entitled "BATTERY-POWERED WELDING-TYPE POWER SUPPLIES AND BATTERIES HAVING REMOVABLE BATTERY CONNECTORS." The entirety of U.S. Patent Application Serial No. 63/665,734 is expressly incorporated herein by reference.

### FIELD OF THE DISCLOSURE

This disclosure relates generally to welding systems, and more particularly to battery-powered welding power supplies and batteries having removable battery connectors.

### BACKGROUND

Battery-powered welding-type power supplies and/or hybrid welding-type power supplies convert stored energy from one or more batteries to output welding-type power. Welding-type equipment is often subjected to industrial environments, which have the potential to cause significant wear and/or damage to welding-type equipment and/or batteries. Batteries are generally treated as consumable items, but can tend to be an expensive consumable. However, the welding-type equipment is treated as a durable item, and premature wear or damage reduces the life of otherwise-capable welding-type equipment.

### SUMMARY

Battery-powered welding power supplies and batteries having removable battery connectors are disclosed, substantially as illustrated by and described in connection with at least one of the figures, as set forth more completely in the claims.

### BRIEF DESCRIPTION OF THE DRAWINGS

FIG. 1 is a block diagram of an example hybrid welding system, in accordance with aspects of this disclosure.
FIG. 2 is a block diagram of an example battery-powered welding system, in accordance with aspects of this disclosure.
FIGS. 3A-3C illustrate an example removable battery connector that may implement the example battery connectors of FIGS. 1 and/or 2.
FIG. 4 illustrates another example removable battery connector that may implement the battery connectors of FIGS. 1 and/or 2.
FIGS. 5A and 5B illustrate another example removable battery connector that may implement the example battery connectors of FIGS. 1 and/or 2.
FIG. 6 illustrates another example removable battery connector that may implement the battery connectors of FIGS. 1 and/or 2.
FIGS. 7A and 7B illustrate another example removable battery connector that may implement the example battery connectors of FIGS. 1 and/or 2.
FIG. 8 illustrates an example battery connector that may implement the battery connectors of FIGS. 1 and/or 2.
FIG. 9 illustrates a portion of another example battery-powered welding system including a removable battery connector that may implement the battery-powered welding system and battery connectors of FIGS. 1 and/or 2, in accordance with aspects of this disclosure.
FIG. 10 is a top perspective view of the example removable battery connector of FIG. 9.
FIG. 11 is a bottom perspective view of the example removable battery connector of FIG. 9.
FIG. 12 is a perspective view of the removable battery connector and internal electrical conductors of the example battery-powered welding power supply of FIG. 9.

The figures are not necessarily to scale. Wherever appropriate, similar or identical reference numerals are used to refer to similar or identical components.

### DETAILED DESCRIPTION

Conventional battery-powered and hybrid welding power supplies have difficulties with the serviceability of the battery pack and the connectors that connect the battery pack to the power supply. In instances in which the power supply or battery suffers from damage to the connectors, the battery or the power supply may be rendered unable to perform battery-powered welding. Such damaged equipment may incur significant repair costs or may need to be scrapped at significant replacement cost.

Disclosed example welding-type power supplies and batteries include user-serviceable and replaceable components of the connections between the battery and the power supply. In some examples, an exposed portion of the battery connector is replaceable, while an internal portion of the battery connector is protected within the housing. Disclosed example replaceable connectors reduce or eliminate the need to replace or repair welding equipment and/or batteries for the sole reason that the connector is damaged. In some example, the replaceable connector has a toolless connection to the battery cells, and the person replacing the connector components do not have to directly work with live battery connections.

In some disclosed examples, the interconnection between the battery pack and the welding power source will use a gang of blade type male connectors that mate with a slot type female connector. The row or gang of interconnects between the battery pack and the welding power supply is a separate element that can be removed for easy and low-cost replacement. The removable portions of the connectors have a secondary connection method to the welding power source, which can be a same or different type of connection as the replaceable portion.

As used herein, the term "welding-type power" refers to power suitable for welding, plasma cutting, induction heating, CAC-A and/or hot wire welding/preheating (including laser welding and laser cladding). As used herein, the term "welding-type power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, a "circuit" includes any analog and/or digital components, power and/or control elements, such as a microprocessor, digital signal processor (DSP), software, and the like, discrete and/or integrated components, or portions and/or combinations thereof.

According to aspects of the disclosure, example battery-powered welding-type power supplies, include: a housing; power conversion circuitry within the housing and configured to convert input battery power to welding-type power; and a battery connector on the housing and configured to electrically couple a battery to the power conversion circuitry, the battery connector comprising: an internal electrical connector integrally coupled within the housing to the power conversion circuitry; a mechanical connector on the housing and configured to removably attach the battery to the housing; and a removable external electrical connector configured to electrically couple the internal electrical connector to a corresponding battery electrical connector while the battery is attached to the housing.

In some example battery-powered welding-type power supplies, the internal electrical connector and the external electrical connector are electrically coupled via a first plurality of blade-and-slot connections. In some example battery-powered welding-type power supplies, the external electrical connector is configured to be coupled to the battery electrical connector via a second plurality of connections. In some example battery-powered welding-type power supplies, the first plurality of blade-and-slot connections have a same number of electrical connections as a second plurality of connections. In some example battery-powered welding-type power supplies, the first plurality of blade-and-slot connections have a different number of electrical connections than a second plurality of connections.

In some example battery-powered welding-type power supplies, the external electrical connector is attached to the housing via one or more fasteners. In some example battery-powered welding-type power supplies, the external electrical connector is attached to the housing via a toolless connection. In some example battery-powered welding-type power supplies, the mechanical connector includes a slide-on connector.

In some example battery-powered welding-type power supplies, the external electrical connector includes a plurality of individually replaceable electrical connectors. In some example battery-powered welding-type power supplies, the external electrical connector is configured to block access to the internal electrical connector.

According to another aspect of the disclosure, example removable battery packs include: a housing; one or more energy storage cells within the housing and configured to store and discharge electrical energy; an internal electrical connector integrally coupled within the housing to the one or more energy storage cells; a mechanical connector on the housing and configured to removably attach the housing to a tool; and a removable external electrical connector configured to electrically couple the internal electrical connector to a corresponding tool electrical connector while the housing is attached to the tool.

In some example removable battery packs, the internal electrical connector and the external electrical connector are electrically coupled via at least one of: a first plurality of blade-and-slot connections; edge connectors; wire connectors; pin connectors; or a compression-type connection. In some example removable battery packs, the external electrical connector is configured to be coupled to the tool electrical connector via a second plurality of blade-and-slot connections. In some example removable battery packs, the first plurality of blade-and-slot connections have a same number of electrical connections as a second plurality of blade-and-slot connections. In some example removable battery packs, the first plurality of blade-and-slot connections have a different number of electrical connections than a second plurality of blade-and-slot connections.

In some example removable battery packs, the external electrical connector is attached to the housing via one or more fasteners. In some example removable battery packs, the external electrical connector is attached to the housing via a toolless connection. In some example removable battery packs, the mechanical connector includes a slide-on connector. In some example removable battery packs, the external electrical connector includes a plurality of individually replaceable electrical connectors. In some example removable battery packs, the external electrical connector is configured to block access to the internal electrical connector.

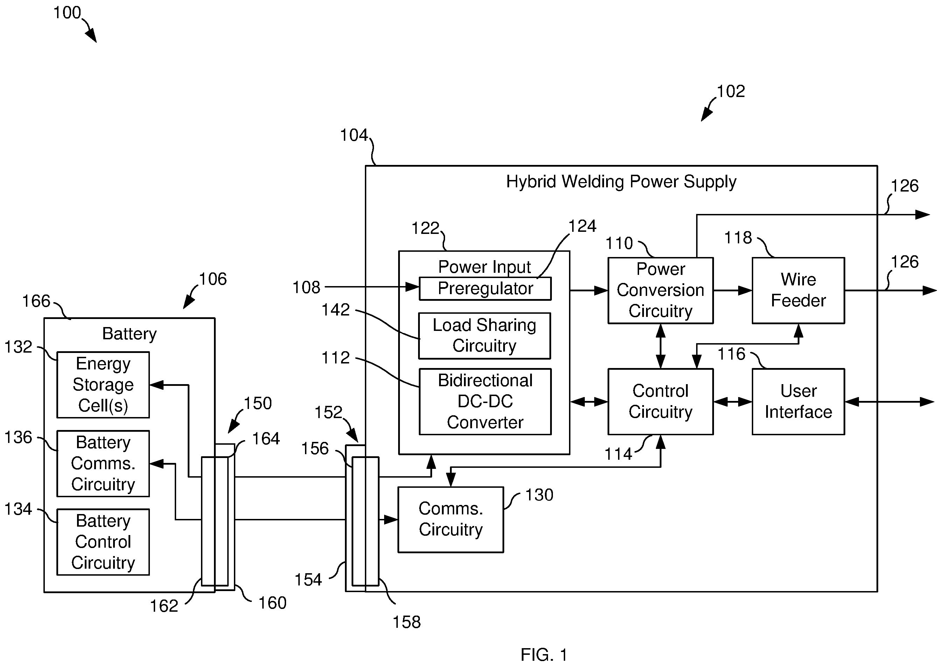

FIG. 1 is a block diagram of an example welding system 100 including a hybrid welding-type power supply 102. The hybrid welding-type power supply 102 is connected to one or more of the batteries 106. The battery 106 may include any type or combination of types of energy storage devices, such as lithium-ion batteries, lead-acid batteries, and/or other chemical batteries, supercapacitors, thermal energy storage, chemical energy storage, and/or mechanical energy storage devices. While the following examples are discussed with reference to batteries, this disclosure applies to any other type of energy storage that is capable of adaptation for welding.

In some examples, the hybrid welding-type power supply 102 may also be selectively connected to utility (e.g., AC input) power 108 from a power source such as a generator, a mains power source, a battery-powered inverter supply, and/or any other power source. The hybrid welding-type power supply 102 may be powered by either or both of the battery 106 or the utility power 108 at any given time. In other examples, the welding-type power supply 102 is powered solely by the battery 106. While examples are disclosed below with reference to a single battery 106, in other examples multiple batteries may be connected to the welding-type power supply 102 at a time and/or the battery 106 may be exchanged.

When the hybrid welding-type power supply 102 is connected to both the utility power 108 and the battery 106, the hybrid welding-type power supply 102 may charge the battery 106. Conversely, when energy is required that is not available from the utility power 108, the battery 106 may provide power to the hybrid welding-type power supply 102.

The hybrid welding-type power supply 102 includes power conversion circuitry 110, a bidirectional DC-DC converter 112, control circuitry 114, a user interface 116, and a wire feeder 118.

The power conversion circuitry 110 is a circuit that converts direct current (DC) power to welding power. The DC power used by the power conversion circuitry 110 is received from a power input 122. The power input 122 includes a preregulator 124 and/or the bidirectional DC-DC converter 112, and supplies one or more DC buses with energy (e.g., a DC bus for the output of the preregulator 124 and one or more DC buses for the output of the bidirectional DC-DC converter 112, one DC bus for each battery connection, etc.). The preregulator 124 may include a rectifier to rectify the AC input from the utility power 108. The preregulator 124 further includes circuitry to convert the rectified AC input to the bus voltage for providing power to the power conversion circuitry 110.

In some examples, the power input 122 includes load sharing circuitry, multiple converters, and/or multi-stage converters, to supply a DC bus with energy from multiple batteries or other energy storage devices. In some examples, the power input 122 may accept energy from different types of batteries simultaneously in addition to accepting energy from multiple batteries of the same type.

The power conversion circuitry 110 converts the energy present at the DC bus (e.g., from the power input 122) to a weld output 126. For example, the power conversion circuitry 110 may include a switched mode power supply, which is controlled by the control circuitry 114 based on specified weld parameters and feedback.

The bidirectional DC-DC converter 112 is a circuit that converts input power (e.g., from the DC bus powered by the utility power 108) to charge the connected battery 106. The bidirectional DC-DC converter 112 also converts the stored power in the battery 106 to converted power to output to the power conversion circuitry 110 (e.g., via one or more DC buses) for output to the power conversion circuitry 110. In some examples, the bidirectional DC-DC converter 112 is replaced with one or more unidirectional DC-DC converters to convert the stored power in the battery 106 for output to the power conversion circuitry 110.

While the example converter 112 of FIG. 1 is a bidirectional converter, in other examples the converter 112 may be replaced with a unidirectional converter that converts power from the battery 106 to provide power to the power conversion circuitry 110. In some such examples, the battery 106 is charged separately from the power supply 102.

The control circuitry 114 may include a processor or other logic circuitry. The control circuitry 114 may include any general-purpose central processing unit (CPU), embedded processing system, or system-on-chip from any manufacturer. In some other examples, the control circuitry 114 may include one or more specialized processing units, such as graphic processing units and/or digital signal processors. The control circuitry 114 executes machine-readable instructions that may be stored locally at the processor (e.g., in an included cache), in a random-access memory (or other volatile memory), in a read only memory (or other non-volatile memory such as FLASH memory), and/or in a mass storage device. Example mass storage devices may be a hard drive, a solid-state storage drive, a hybrid drive, a RAID array, and/or any other mass data storage device.

The control circuitry 114 controls the power conversion circuitry 110 to output the weld output 126. The control circuitry 114 controls the bidirectional DC-DC converter 112 to convert power from the power input 122 to charge the battery 106 and/or controls the bidirectional DC-DC converter 112 to convert power from the battery 106 to provide the converted battery power to the power conversion circuitry 110. The control circuitry 114 further controls the bidirectional DC-DC converter 112 to charge the battery 106 when the utility power 108 is available and at least a portion of the utility power 108 is available for charging the battery 106 (e.g., the utility power 108 is not completely consumed by the power conversion circuitry 110 and/or the wire feeder 118). Conversely, the control circuitry 114 controls the bidirectional DC-DC converter 112 to convert power from the battery 106 to provide the converted battery power to the power conversion circuitry 110 when a demand for welding power is higher than can be provided by the utility power 108.

The example wire feeder 118 includes a wire feed motor to provide electrode wire to the welding operation (e.g., when the welding operation involves a wire feeder, such as when gas metal arc welding, flux cored arc welding, etc.). When the welding operation involves a wire feeder, the control circuitry 114 controls powers the wire feeder 118. The wire feeder 118 may be powered by the weld output 126 or by another output from the power conversion circuitry 110. In some other examples, the wire feeder 118 may be a separate device connected to the weld output 126 external to the hybrid welding-type power supply 102.

The user interface 116 enables input to the hybrid welding-type power supply 102 and/or output from the hybrid welding-type power supply 102 to a user. The control circuitry 114 may indicate the state of charge of the battery 106 and/or a mode of operation, such as a battery charging mode, an external power welding mode (e.g., welding mode powered by utility power), a combination welding-charging mode (e.g., welding and charging the battery 106 using utility power 108), a battery powered welding mode, or a hybrid welding mode (e.g., welding boost mode powered by utility power and battery power), of the hybrid welding-type power supply 102 via the user interface 116.

The user interface 116 further includes inputs to allow an operator to specify welding parameters, such as a workpiece thickness, output voltage, output current, wire feed speed, welding wire diameter, welding wire type, welding process, pulse frequency, or pulse magnitude.

The example power supply 102 includes a housing 104, within which the power conversion circuitry 110, the control circuitry 114, the user interface 116, the wire feeder 118, the power input 122, the bidirectional DC-DC converter 112, the load sharing circuitry 142, and/or the communications circuitry 130 are mounted. The example housing 104 may include any combination of panels, joints, bulkheads, and/or other support and/or protective structures, and/or any airflow or other heat management features.

The example battery 106 includes one or more energy storage cells 132 to store energy. The example energy storage cells 132 may be lithium-based cells (e.g., lithium nick manganese cobalt, lithium cobalt, lithium iron phosphate, etc.), lead-acid cells, alkaline cells, nickel-based cells (e.g., nickel-zinc, nickel-iron, nickel-metal hydride, etc.), zinc-carbon cells, and/or any other type of cell chemistry. In some other examples, the energy storage cells 132 may include supercapacitors and/or ultracapacitors, and/or any

Some types of batteries include battery control circuitry 134 and/or battery communications circuitry 136. For example, battery control circuitry 134 may control internal load balancing of the battery 106, and/or battery communication circuitry 136 may allow for communication of battery information to external devices and/or implement control of one or more aspects of the battery 106 by an external device, such as the control circuitry 114. The example battery communication circuitry 136 of the battery 106 and/or the communication circuitry 130 of the hybrid welding-type power supply 102 may be configured to communicate through any wired or wireless techniques. For example, the battery communication circuitry 136 and/or the communication circuitry 130 may communicate via serial communications through the battery contacts. In other examples, the battery communication circuitry 136 and/or the communication circuitry 130 may communicate wirelessly via radio frequency identification (RFID), near field communications (NFC), Bluetooth^{®}, and/or any other close-proximity communications, or any other desired wireless communications technique.

The example power input 122 may further include load sharing circuitry 142. The load sharing circuitry 142 controls a balance of power input from the utility power 108 and the one or more battery 106. For example,the control circuitry 114 may control the load sharing circuitry 142 to cause relatively more power to be drawn from the utility power 108 to preserve battery life and/or avoid unnecessary battery discharge. The control circuitry 114 may also control the load sharing circuitry 142 to cause relatively more power to be drawn from the battery 106, such as to reduce high electricity costs and/or save fuel when utility power 108 is powered by an engine-driven (or other portable fuel-driven) source.

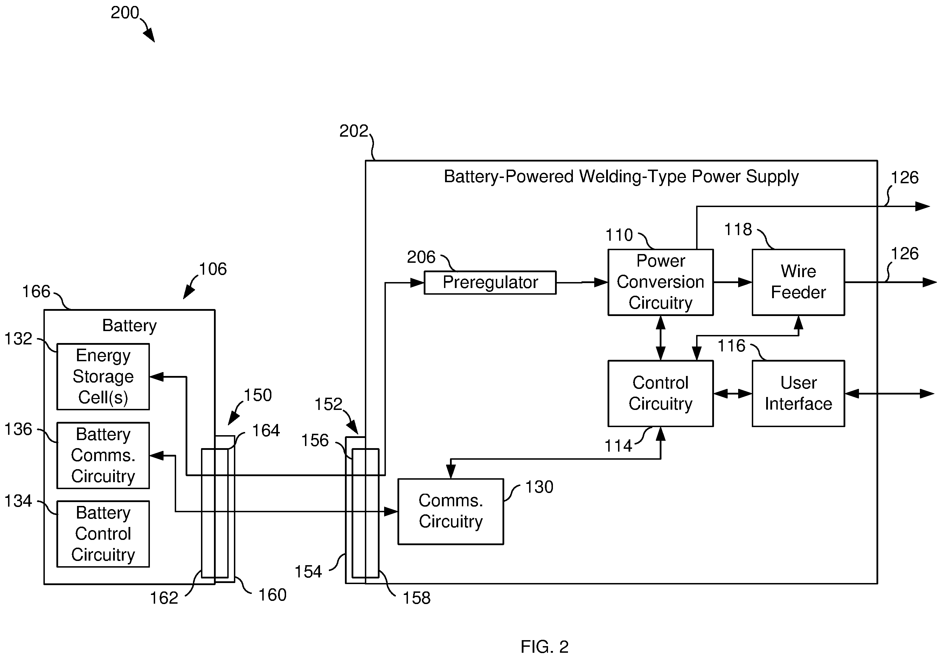

FIG. 2 is a block diagram of an example battery-powered welding system 200. The system 200 of FIG. 2 includes a battery-powered welding-type power supply 202, which is powered by a battery 106. The example battery-powered welding-type power supply 202 may be similar to the power supply 102 of FIG. 1, including the housing 104, the power conversion circuitry 110, the control circuitry 114, the user interface 116, the wire feeder 118, and the communications circuitry 130 described above with reference to FIG. 1. The example battery-powered welding-type power supply 202 includes a housing 204, which may be similar or identical to the housing 104 of the hybrid welding power supply 102.

The example power supply 202 is powered by the battery 106 and does not include an input for utility power as in the hybrid system 100 of FIG. 1. The example power supply 202 may include a preregulator 206, such as a boost converter, to increase a voltage output by the battery 106 to a voltage suitable for use by the power conversion circuitry 110.

In both the example systems 100, 200 of FIGS. 1 and 2, the battery 106 is detachably connected to the power supply 102, 202. For example, the battery 106 and the power supply 102, 202 include complementary connectors. The example battery 106 includes a connector 150, and the power supplies 102, 202 include a battery connector 152. The connectors 150, 152 cooperate to provide both mechanical and electrical connections between the battery 106 and the power supply 102, 202, so as to electrically couple the battery 106 to the power conversion circuitry 110. For example, the battery connector 152 may be connected to the housing 104 to allow for connection of the battery 106 to the housing 104. The example battery connector 152 mechanically couples the battery 106 to the welding-type power supply 102, 202 such that the battery 106 is supported by the power supply 102, 202 when the power supply 102, 202 is physically moved, or vice versa.

In some examples, the connectors 150, 152 are slide-on type connectors, in which the connector 150 is mechanically coupled to the connector 152 by sliding the connector 150 onto the battery connector 152. The connector 150 or the connector 152 may further include a latch to resist detachment of the connector 150 from the battery connector 152. The example connectors 150, 152 establish an electrical connection when the connectors 150, 152 are mechanically coupled, such as by using blade terminals one or both of the connectors 150, 152 and spring sockets opposing the blade terminals.

In some other examples, the connectors 150, 152 may be tower-type connectors, in which a tower connector is inserted into a slot to establish the mechanical and electrical connections. The slide-on type connector and the tower connectors may be similar to slide-on and/or tower-type connectors used in conventional battery-powered power tools, and/or may be adapted from conventional slide-on and/or tower-type connectors to accommodate the capacity of the battery 106 and/or the desired form factor of the battery 106.

Welding equipment can be subjected to physical impacts and/or other damage. Damage to the electrical contacts of a battery connector of conventional hybrid and/or battery-powered welding equipment could render the equipment inoperable or subject to expensive repairs. Because welding equipment is relatively expensive (e.g., compared to the cost of the battery), the battery connectors of conventional welding equipment are considered weak spots of the equipment.

In contrast with conventional battery-powered and hybrid welding systems, the example welding-type power supplies 102, 202 have battery connectors 152 which both electrically and mechanically couple the battery to the welding-type power supply 102, 202 and which are field-removable and replaceable in the event of damage. In some examples, the battery connector 152 of FIGS. 1 and 2 includes a mechanical connector 154 on the housing 104. The mechanical connector 154 removably attaches the battery 106 to the housing 104.

The battery connector 152 further includes a removable external electrical connector 156 and an internal electrical connector 158. The internal electrical connector 158 is integrally coupled within the housing to the power conversion circuitry 110. For example, the internal electrical connector 158 may include a compression-type connector, an edge connector, a wire connector, and/or any other type of electrical connector capable of conducting the current from the battery 106 to the power conversion circuitry 110. The internal electrical connector 158 may be attached to a printed circuit board (PCB) or other structural elements within the housing 104.

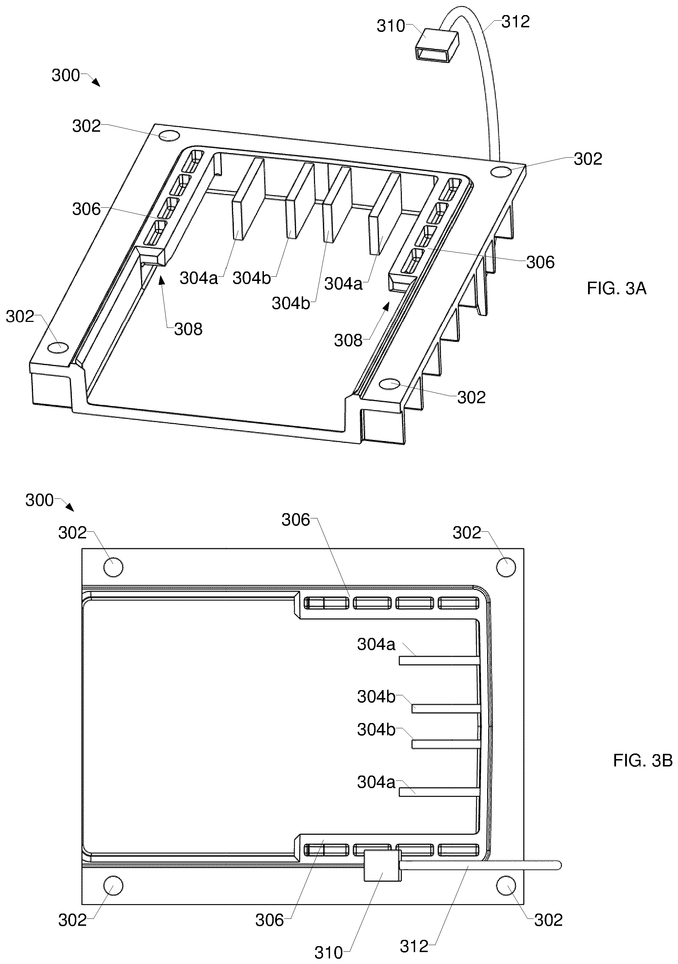

The example external electrical connector 156 electrically couples the internal electrical connector 158 to the connector 150 of the connected battery 106. FIGS. 3A-3C illustrate an example removable battery connector 300 that may implement the example external electrical connectors 156 of FIGS. 1 and/or 2. In the example of FIGS. 3A-3C, the removable battery connector 300 is attachable to the housing 104 via attachment points 302. The attachment points 302 may be secured to corresponding locations on the housing 104 via screws, pins, clips, clamps, and/or any other type of fastener or attachment technique. In other examples, the external electrical connector 156 is attached to the housing 104 and/or to the mechanical connector 154 via a hatch connection (e.g., a snap-in connection or other toolless connection) and/or any other physical connection.

To couple the external electrical connector 156 to the connector 150 of the battery 106, the example removable battery connector 300 includes two or more terminals that correspond to the electrical connectors on the connector 150. For example, the connector 150 and the external electrical connector 156 may include a set of blade-and-slot connections, in which the connector 150 includes one or more slot connectors, and the external electrical connector 156 includes complementary blade connectors 304. Additionally or alternatively, the connector 150 may include the blade connectors and the external electrical connector 156 may include the slot connectors, or the connector 150 and the external electrical connector 156 each include a combination of blade connectors and slot connectors.

In other examples, the connector 150 and the external electrical connector 156 may include a set of pin-and-post connections. The blade-and-slot connections, pin-and-post connections, or other type of connections, may be oriented to make the electrical connection as the connector 150 is mechanically attached to the mechanical connector 154 of the battery connector 152 (e.g., blades may slide into slots as a slide-on connector is attached to the mechanical connector 154).

The removable battery connector 300 includes rails 306 which form channels 308 to define a connection direction for a slide-on connection between the connector 150 and the mechanical connector 154. The connector 150 may include corresponding rails that slide into the channels 308 and engage the rails 306 to prevent movement of the battery 106 in a direction transverse to the direction of the channels 308.

The blade connectors 304 may include multiple sets of connections in parallel. For example, a first subset 304a of the blade connectors 304 are connected in parallel to connect to a first polarity of the battery 106 and a second subset 304b of the blade connectors 304 are connected in parallel, separate from the first subset 304a, to connect to a second polarity of the battery 106. While the blade connectors 304 have relatively high contact impedance with the opposing connectors, the blade connectors 304 have a high strength, are resistant to damage, and have a high repeatability.

To couple the external electrical connector 156 to the internal electrical connector 158, the example external electrical connector 156 includes a second set of connectors that are complementary to the internal electrical connector 158 and are electrically connected to the internal electrical connector 158. For example, the external electrical connector 156 may include an edge connector, a wire connector, a compression-type connector, and/or any other type of connection. In the example of FIGS. 3A-3C, the blade connectors 304 are further coupled to the internal electrical connector 158 via a wire connector 310. The example wire connector 310 is connected to the blade connectors 304 by wires 312, which may be bundled into a same outer jacket. For example, one or more first wires are electrically connected to the first subset 304a of the blade connectors 304, and one or more second wires are electrically connected to the second subset 304b. The wire connector 310 may be a multi-pin pin-and-post connector, which connects to a corresponding connector within the housing 104 and which is electrically coupled to the power conversion circuitry 110 (e.g., via the power input 122 and/or the preregulator 204). Additionally, the wires 312 and the wire connector 310 may provide an easier method of connecting and disconnecting the external electrical connector 156 from the internal electrical connector 158 during replacement of the external electrical connector 156.

The wire connector 310 may have fewer connections (e.g., fewer pins per polarity) than the blade-and-slot connectors, due to the lower impedance per connection. For example, if there are four blades total (two blades for each polarity) to provide both polarities of the battery power between the external electrical connector 156 and the battery 106, there may be two pins total (e.g., one pin and one wire for each polarity) to connect the external electrical connector 156 to the internal electrical connector 158. In other examples, the connection between external electrical connector 156 and the battery 106 may have a same number of connections as the connection between the external electrical connector 156 and the internal electrical connector 158.

In other examples, another set of blade-and-slot connections may be used to connect the blade connectors 304 to the internal electrical connector 158. In still other examples, other types of connectors may be used, such as single-pin pin-and-post connections, edge connectors, compression-type connectors, and/or any other type of connector. In the example of FIGS. 3A-3C, the wire connector 310 provides a lower impedance than other types of connectors to reduce an overall impedance between the battery 106 and the power conversion circuitry 110.

In the event that the removable battery connector 300 is damaged, instead of discarding the entire welding-type power supply 102, 202 the removable battery connector 300 can be disconnected from the housing 104 at the attachment points 302 and disconnected from the internal electrical connector 158 (e.g., by disconnecting the wire connector 310 from the internal electrical connector 158). A replacement battery connector, which may be similar or identical to the removable battery connector 300, may then be connected to the internal electrical connector 158 (e.g., by connecting the wire connector 310 to the internal electrical connector 158) and attaching the new battery connector to the housing 104 at the attachment points (e.g., using fasteners, a clip connection, etc.).

The example connector 150 of the battery 106 may also be user-replaceable or serviceable in a manner similar or identical to the battery connector 152 of the power supply 102, 202. For example, the connector 150 of FIGS. 1 and 2 includes a mechanical connector 160, an internal electrical connector 162, and a removable external electrical connector 164.

The mechanical connector 160 removably attaches the battery 106 to the power supply 102, 202. For example, the mechanical connector 160 may be attached to a housing 166 of the battery 106, within which the energy storage cell 132, the battery control circuitry 134, and the battery communications circuitry 136 are housed.

The internal electrical connector 162 is integrally coupled within the housing to the energy storage cell(s) 132. For example, the internal electrical connector 158 may include a compression-type connector, an edge connector, a wire connector, and/or any other type of electrical connector capable of conducting the current from the energy storage cells 132 to the power supply 102, 202. The internal electrical connector 158 may be attached to a printed circuit board (PCB) or other structural elements within the housing 104, such as a PCB that also includes the battery control circuitry 134 and/or the battery communications circuitry 136.

The external electrical connector 164 is a removable connector that electrically couples the internal electrical connector 162 to the corresponding external electrical connector 156 of the power supply 102, 202. For example, the external electrical connector 164 may make an electrical connection to the external electrical connector 156 when the mechanical connector 160 is attached to the mechanical connector 154 of the power supply 102, 202.

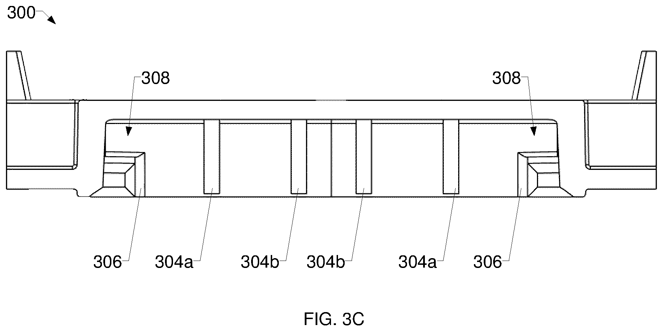

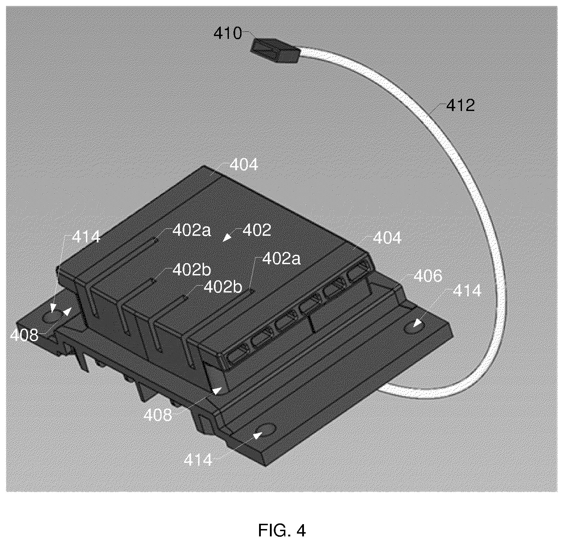

FIG. 4 illustrates another example removable connector 400 that may implement the external electrical connector 164 of FIGS. 1 and/or 2. The example removable connector 400 is configured to be mechanically and electrically coupled to the removable battery connector 300 of FIG. 3, and includes slots 402 and rails 404.

The example rails 404 are dimensioned to slide into respective channels, such as the channels 308 of FIG. 3, to align the slots 402 with the blades 304 during insertion. The rails 404 and a body 406 of the connector 400 further define a channel 408, which aligns with the rails 306 of FIG. 3. When engaged, the rails 306, 404 on either side of the connectors 300, 400 limit the respective movement of the connector(s) 300, 400 to the directions of the channels 308, 408.

The connectors 300, 400 and/or the housings 104, 166 may include a latch or other locking device to prevent inadvertent disconnection of the connectors 300, 400. For example, the latch may be a push-button latch which actuates a locking surface to lock the connector 400 into place when fully seated, and actuates the locking surface to release (e.g., allow sliding of) the connector 400 relative to the connector 300 when the button is depressed.

The example slots 402 each house a connector, such as a leaf spring connector, to make electrical contact with a corresponding one of the blades 304 during coupling of the connectors 300, 400. In other examples, the slots 402 may be modified or replaced with other types of connectors to match the type of connector to which the external electrical connector 164 is to be coupled. Like the rails 306, the slots 402 may include multiple sets of connections in parallel. For example, a first subset 402a of the slots 402 are connected in parallel to connect to a first polarity of the battery 106 and a second subset 402b of the slots 402 are connected in parallel, separate from the first subset 402a, to connect to a second polarity of the battery 106.

To couple the external electrical connector 164 to the internal electrical connector 162, the example external electrical connector 164 includes a second set of connectors that are complementary to the internal electrical connector 162 and are electrically connected to the internal electrical connector 162. For example, the external electrical connector 164 may include an edge connector, a wire connector, a compression-type connector, and/or any other type of connection. In the example of FIG. 4, the slots 402 are further coupled to the internal electrical connector 162 via a wire connector 410. The example wire connector 410 is connected to the slots 402 (e.g., leaf springs or other connectors in the slots 402) via wires 412, which may be bundled into a same outer jacket. For example, one or more first wires are electrically connected to the first subset 402a of the slots 402, and one or more second wires are electrically connected to the second subset 402b. The wire connector 410 may be a multi-pin pin-and-post connector, which connects to a corresponding connector within the housing 166 of the battery 106, and which is electrically coupled to the power conversion circuitry energy storage cell(s) 132 (e.g., via the battery control circuitry 134). Additionally, the wires 412 and the wire connector 410 may provide an easier method of connecting and disconnecting the external electrical connector 164 from the internal electrical connector 162 during replacement of the external electrical connector 164 on the battery 106.

In addition to providing positive and negative polarity connections between the battery 106 and the power supply 102, the example blades 304 and slots 402 (or other electrical connection type), and/or the wire connectors 310, 410 and the wires 312, 412, may provide communications between the battery 106 (e.g., the battery communication circuitry 136) and the power supply 102, 202 (e.g., the communications circuitry 130). For example, communications may be provided using the same connectors 310, 410 as used to conduct power, or additional connectors 310, 410 may be used to conduct communications.

To attach and remove the connector 400 to the housing 166 of the battery 106, the example connector 400 includes attachment points 414. The attachment points 414 may be secured to corresponding locations on the housing 166 via screws, pins, clips, clamps, and/or any other type of fastener or attachment technique. In other examples, the removable connector 400 is attached to the housing 166 and/or to the mechanical connector 160 via a snap connection and/or any other physical connection.

When installed, the disclosed example external electrical connectors 156, 164 may block access to the internal electrical connector 158, 162, so that damage to the internal electrical connector 158, 162 is significantly less likely.

While the example connector 300 is described above as an implementation of the battery connector 152 of FIGS. 1 and 2, and the connector 400 is described above as an implementation of the connector 150, in other examples the entire connectors 300, 400 and/or features of the connectors 300, 400 may be reversed between the connectors 150, 152.

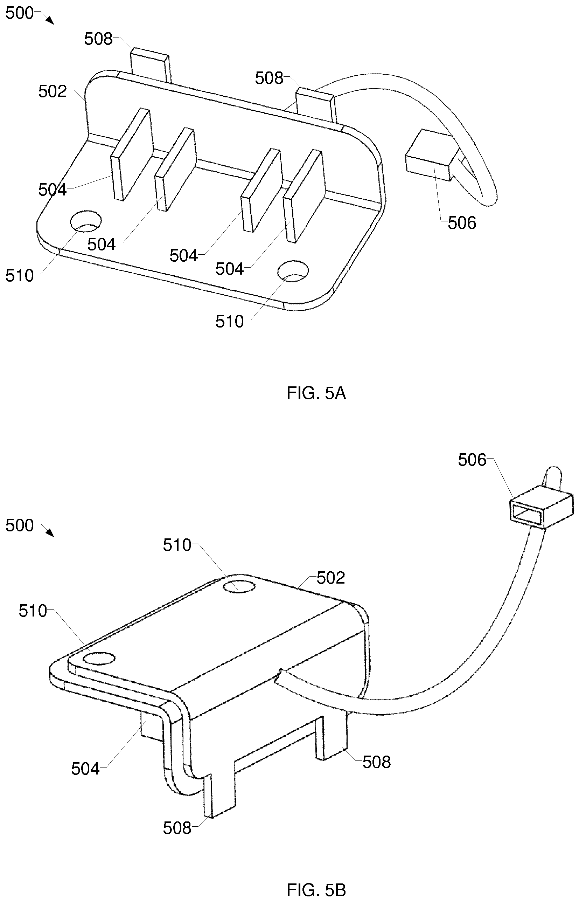

The example connector 300 implements both the external electrical connector 156 and the mechanical connector 154. Similarly, the example connector 400 implements both the external electrical connector 164 and the mechanical connector 160 of the battery 106. However, other example implementations may include only the external electrical connector 156 or the external electrical connector 164. FIGS. 5A and 5B illustrate another example removable battery connector 500 that may implement either of the example external electrical connectors 156, 164 of FIGS. 1 and/or 2.

The example removable battery connector 500 includes a body 502, first connectors 504, and second connectors 506. The body 502 is configured to be coupled to the housing 104 of the power supply 102, 202 (e.g., at a location on the housing 104 proximate to the mechanical connector 154) or the housing 166 of the battery 106 (e.g., at a location on the housing 166 proximate to the mechanical connector 160). The body 502 includes tabs 508 that engage corresponding slots in the housing 104, 166 and attachment points 510 which may be secured to corresponding attachment points on the housing 104, 166 (e.g., via fasteners). For example, the body 502 may be secured to the housing 104, 166 by inserting the tabs 508 into the slots on the housing 104, and securing the attachment points 610 to the housing 104, 166.

The example first connectors 504 may be similar to the blades 304 of FIGS. 3A-3C, and are electrically coupled to the second connectors 506. The second connector 506 may be similar to the wire connector 310 of FIGS. 3A-3C. However, the first connectors 504 and/or the example second connectors 506 may be implemented using other types of connections such as the connection types mentioned above.

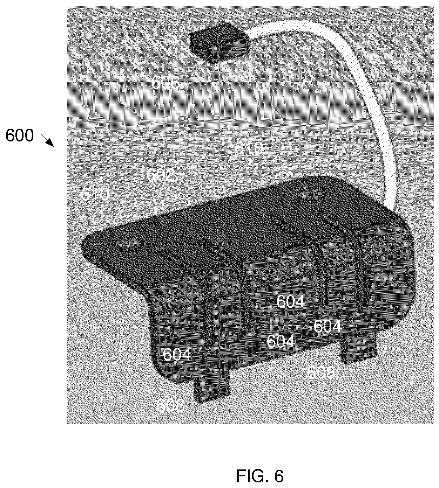

FIG. 6 illustrates another example removable battery connector 600 that may implement either of the external electrical connectors 156, 164 of FIGS. 1 and/or 2.

The example removable battery connector 600 includes a body 602, first connectors 604, and second connectors 606. The body 602 is configured to be coupled to the housing 104 of the power supply 102, 202 (e.g., at a location on the housing 104 proximate to the mechanical connector 154) or the housing 166 of the battery 106 (e.g., at a location on the housing 166 proximate to the mechanical connector 160). The body 602 includes tabs 608 that engage corresponding slots in the housing 104, 166, and attachment points 610 which may be secured to corresponding attachment points on the housing 104, 166 (e.g., via fasteners). For example, the body 602 may be secured to the housing 104, 166 by inserting the tabs 608 into the slots on the housing 104, and securing the attachment points 610 to the housing 104, 166.

The example first connectors 604 may be similar to the slots 402 of FIG. 4, and are electrically coupled to the second connectors 606. The second connector 606 may be similar to the wire connector 410 of FIG. 4. However, the first connectors 604 and/or the example second connectors 606 may be implemented using other types of connections such as the connection types mentioned above.

In some examples, the removable battery connector 600 is complementary to the connector 500 of FIG. 5. For example, one of the removable battery connector 500 or the removable battery connector 600 may implement the external electrical connector 156 of the power supply 102, 202, and the other of the removable battery connector 500 or the removable battery connector 600 may implement the external electrical connector 164 of the battery 106. In such examples, the mechanical connectors 154, 160 may be implemented in a similar manner as the connectors 300, 400 of FIGS. 3 and 4, except that the mechanical connectors 154, 160 may be permanently or integrally fixed to the housings 104, 166, and the external electrical connectors 156, 164 are separately removable.

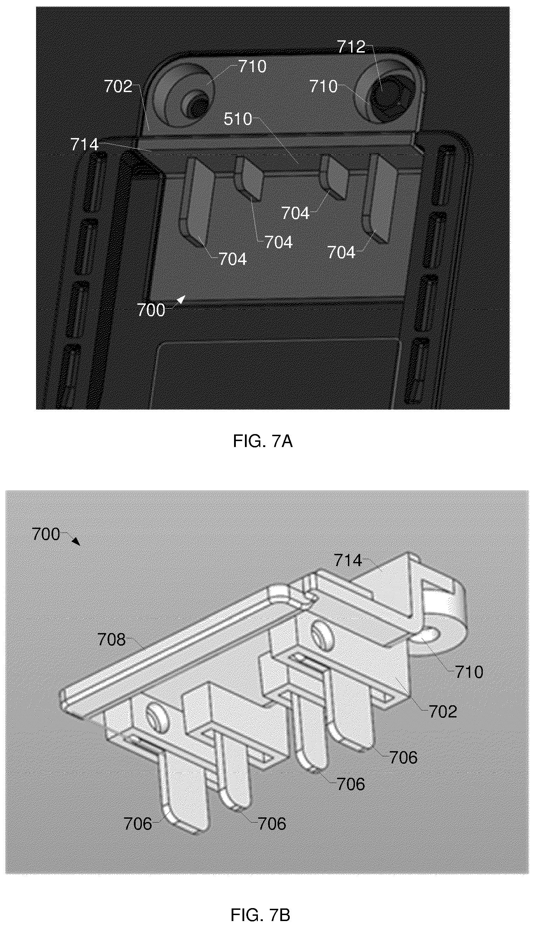

FIGS. 7A and 7B illustrate another example removable battery connector 700 that may implement either of the external electrical connectors 156, 164 of FIGS. 1 and/or 2.

The example removable battery connector 700 includes a body 702, first connectors 704, and second connectors 706. The body 702 is configured to be coupled to the housing 104 of the power supply 102, 202 (e.g., at a location on the housing 104 proximate to the mechanical connector 154) or the housing 166 of the battery 106 (e.g., at a location on the housing 166 proximate to the mechanical connector 160). The body 702 includes a shoulder 708 that engages a corresponding slot, ridge, or other surface in the housing 104, 166, and attachment points 710 which may be secured to corresponding attachment points on the housing 104, 166 (e.g., via fasteners 712). The example body 702 includes a step section 714 to conform to the installation position of the removable battery connector 700 on the housing 104, 166.

As illustrated in FIG. 7A, the body 702 may be secured to the housing 104, 166 by inserting the shoulder into a slot on the housing 104, 166, and securing the attachment points 710 to the housing 104, 166 via a fastener 712 such as a screw. FIG. 7A further illustrates how the mechanical connector 154, 160 (e.g., the rails 306 and channels 308 of FIGS. 3A-3C) may be integral to the housing 104, 166 and that the removable battery connector 700 is attached or otherwise installed adjacent the mechanical connector 154, 160.

The example first connectors 704 may be similar to the blades 304 of FIGS. 3A-3C, and are electrically coupled to the second connectors 706. As illustrated in FIG. 7B, the second connector 706 may be integral with the first connectors 704 by using a same blade to extend through the body 702 to form the first connectors 704 on an exterior side of the body 702 and form the second connectors 706 on an interior side of the body 702 in the installed position. In such examples, the internal electrical connector 158, 162 may be implemented using leaf springs to contact the second connectors 706 in the installed position. However, the first connectors 704 and/or the example second connectors 706 may be implemented using other types of connections such as the connection types mentioned above.

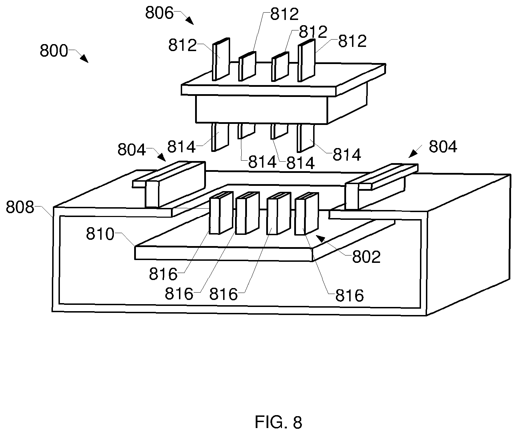

FIG. 8 is a cross-sectional view of an example battery connector 800 that may be used to implement the battery connector 152 of FIGS. 1 and/or 2. The example battery connector 800 includes an internal electrical connector 802, a mechanical connector 804, and a removable external electrical connector 806. The example battery connector 800 is coupled to a housing 808 of welding equipment, such as a welding-type power supply.

The example internal electrical connector 802 is mounted to a PCB 810 within the housing 808. In other examples, the internal electrical connector 802 is connected to another structural element within the housing 808, or is otherwise integral or permanently affixed to the welding equipment. The internal electrical connector 802 includes a set of terminals or connectors, which are electrically coupled to, for example, power conversion circuitry and/or other circuitry or elements of the welding equipment which receive power from a battery.

The example mechanical connector 804 provides a mechanical connection for a battery to be attached to the welding equipment. For example, the mechanical connector 804 may be a slide-on type of connector, a tower-type of connector, or any other type of mechanical connection. While the example mechanical connector 804 is integral or permanently affixed to the housing 808, in other examples the mechanical connector 804 may be detachable from the housing 808.

The example removable external electrical connector 806 is attachable to the housing 808 and the internal electrical connector 802. The removable external electrical connector 806 of FIG. 8 includes first terminals 812 configured to be coupled to a battery which is connected to the welding equipment (e.g., via the mechanical connector 804). The example first terminals 812 include blade-type terminals. The removable electrical connector 806 further includes second terminals 814, such as blade terminals. The second terminals 814 are positioned and aligned to couple to corresponding internal terminals 816 (e.g., connectors) of the internal electrical connector 802 when the removable external electrical connector 806 is connected to the housing 808. For example, the terminals 816 may include sockets or leaf spring connectors which receive the blade-type second terminals 814.

The first terminals 812, the second terminals 814, and the internal terminals 816 provide positive and negative polarity connections between a connected battery and the battery-powered circuitry of the welding equipment. The first terminals 812, the second terminals 814, and the internal terminals 816 may further provide a communications connection between communications circuitry in the battery and the welding equipment.

In the event that the first terminals 812 are damaged or otherwise inoperable, the battery connector 800 may be removed from the housing 808, which also breaks the connection between the first and second terminals 812, 814 and the internal terminals 816. A replacement battery connector may then be added, which may be identical to the replaced connector or may be different. In some examples, the connector 800 may be swapped with different connectors to accommodate or adapt batteries having different types or form factors.

Instead of a replaceable connector, in some other examples the welding-type power supply 102, 202 and the battery 106 of FIGS. 1 and/or 2 may include auxiliary connectors for providing power from the battery 106 to the welding-type power supply 102, 202 in the event of damage to either of the connectors 150, 152. For example, the welding-type power supply 102, 202 and the battery 106 may include jumper wires and a jumper connector that can be stowed when not needed and used to connect the welding-type power supply 102, 202 and the battery 106 when the connectors 150, 152 are incapable of delivering the power from the battery 106 to the power supply 102, 202.

In some other examples, the external electrical connectors 156, 164 may include individually replaceable terminals or connectors. For example, the blades 304 of FIGS. 3A-3C may be constructed to be individually removeable and replaceable to further extend the life of the external electrical connectors 156, 164. However, other types of connectors may also have individually replaceable components.

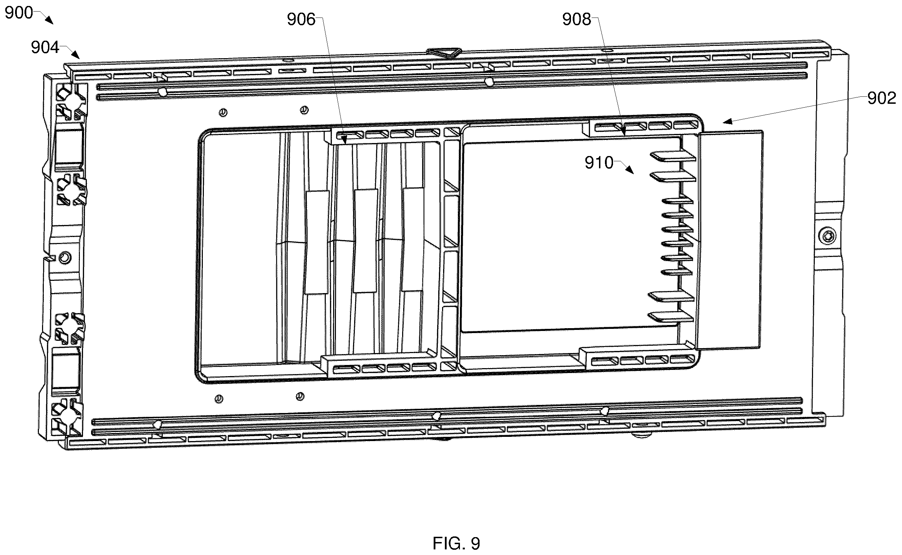

FIG. 9 illustrates a portion of another example battery-powered welding power supply 900 including a removable battery connector 902 that may implement the battery-powered welding system and battery connectors of FIGS. 1 and/or 2. The example battery-powered welding power supply 900 may include the components of the example hybrid welding power supply 102 of FIG. 1 and/or the battery-powered welding power supply 202 of FIG. 2.

The power supply 900 includes a housing 904, which may include a bottom side 906 having the battery connector 902. The battery connector 902 may include mechanical connectors 906, 908 configured to mechanically and electrically engage a battery pack for delivery of power to the power supply 900. In some examples, the connectors 906, 908 are slide-on type connectors, in which corresponding connectors on the battery pack are mechanically coupled to the connectors 906, 908 by sliding the connectors 906, 908 onto the battery connectors (e.g., battery connectors 152). The connectors 906, 908 and/or the battery connector 152 may further include a latch to resist detachment of the battery pack from the power supply 900.

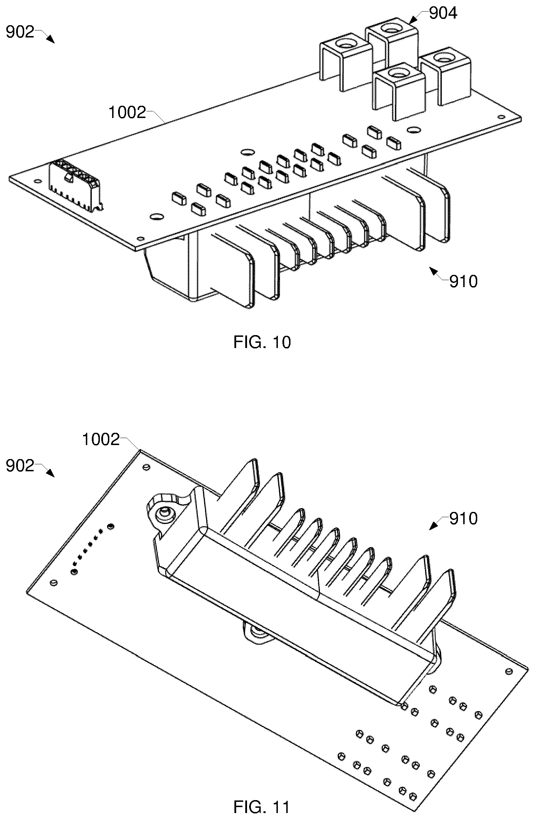

The battery connector 902 further includes a removable external electrical connector 910. The example external electrical connector 910 is a blade-type connector, which connects with corresponding slots on the battery pack to provide electrical connections for transfer of power and/or data between the battery pack and the power supply 900. FIG. 10 is a top perspective view of the example removable battery connector 902 of FIG. 9. FIG. 11 is a bottom perspective view of the example removable battery connector 902 of FIG. 9. The example removable battery connector 902 includes the external electrical connector 910.

The external electrical connector 910 is electrically and mechanically coupled to a circuit board 1002 (e.g., a printed circuit board). The removable battery connector 902 further includes an internal electrical connector 1004, which is also electrically and mechanically coupled to the circuit board 1002. The internal electrical connector 1004 is electrically coupled to the external electrical connector 910 via the circuit board 1002, and electrically couples the external electrical connector 910 to the power conversion circuitry of the power supply 900 (e.g., power conversion circuitry 110 of FIGS. 1 and/or 2).

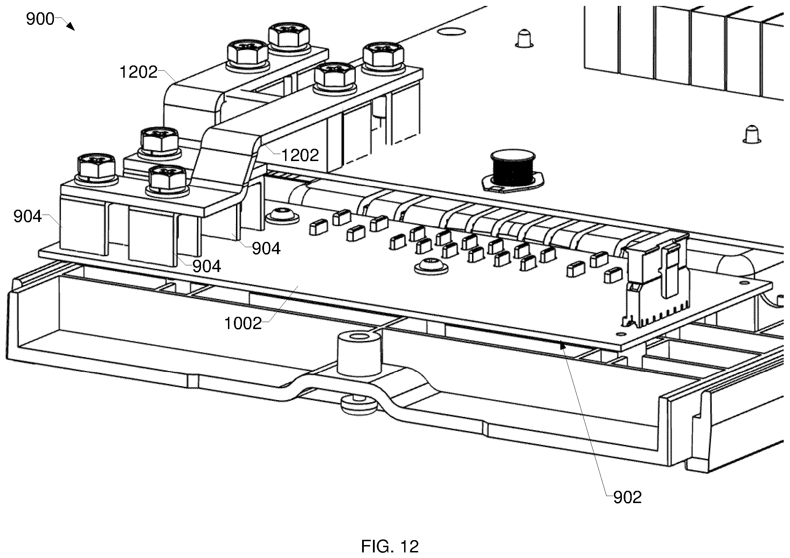

FIG. 12 is a perspective view of the removable battery connector 902 and internal electrical conductors 1202 of the example battery-powered welding power supply 900 of FIG. 9. As illustrated in FIG. 12, the internal electrical connector 1004 is coupled to the internal electrical conductors 1202 to conduct the power and/or data to the components of the power supply 900. For example, the conductors 1202 may include bus bars electrically and physically connected to the internal electrical connector(s) 1004 using fasteners 1204 or other coupling techniques. The example circuit board 1002 may be coupled to the housing 904 of the power supply 900, such as by using fasteners 1206, clips, and/or other securing techniques.

The removable battery connector 902 is removable as a unit, including the external electrical connector 910, the circuit board 1002, and the internal electrical connector 1004, by disconnecting (e.g., unfastening) the conductors 1202 from the internal electrical connector 1004 and disconnecting (e.g., unfastening) the circuit board 1002 from the housing 904. In the example of FIGS. 9-12, the operator is required to access an interior of the housing 904 to remove and replace the removable battery connector 902. However, once access is obtained, the removal and replacement only involves removal of the fasteners 1204, 1206, removal of the battery connector 902 as a unit, installation of a replacement battery connector 902, and reinstallation of the fasteners 1204, 1206.

The present methods and systems may be realized in hardware, software, and/or a combination of hardware and software. Example implementations include an application specific integrated circuit and/or a programmable control circuit.

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

While the present method and/or system has been described with reference to certain implementations, it will be understood by those skilled in the art that various changes may be made and equivalents may be substituted without departing from the scope of the present method and/or system. For example, block and/or components of disclosed examples may be combined, divided, re-arranged, and/or otherwise modified. In addition, many modifications may be made to adapt a particular situation or material to the teachings of the present disclosure without departing from its scope. Therefore, the present method and/or system are not limited to the particular implementations disclosed. Instead, the present method and/or system will include all implementations falling within the scope of the appended claims, both literally and under the doctrine of equivalents.

Certain embodiments of the invention are described in the following clauses:
Clause 1. A battery-powered welding-type power supply, comprising:
   a housing;
   power conversion circuitry within the housing and configured to convert input battery power to welding-type power; and
   a battery connector on the housing and configured to electrically couple a battery to the power conversion circuitry, the battery connector comprising:
      an internal electrical connector integrally coupled within the housing to the power conversion circuitry;
      a mechanical connector on the housing and configured to removably attach the battery to the housing; and
      a removable external electrical connector configured to electrically couple the internal electrical connector to a corresponding battery electrical connector while the battery is attached to the housing.
Clause 2. The battery-powered welding-type power supply as defined in clause 1, wherein the internal electrical connector and the external electrical connector are electrically coupled via a first plurality of blade-and-slot connections.
Clause 3. The battery-powered welding-type power supply as defined in clause 2, wherein the external electrical connector is configured to be coupled to the battery electrical connector via a second plurality of connections.
Clause 4. The battery-powered welding-type power supply as defined in clause 3, wherein the first plurality of blade-and-slot connections have a same number of electrical connections as a second plurality of connections.
Clause 5. The battery-powered welding-type power supply as defined in clause 3, wherein the first plurality of blade-and-slot connections have a different number of electrical connections than a second plurality of connections.
Clause 6. The battery-powered welding-type power supply as defined in clause 1, wherein the external electrical connector is attached to the housing via one or more fasteners.
Clause 7. The battery-powered welding-type power supply as defined in clause 1, wherein the external electrical connector is attached to the housing via a toolless connection.
Clause 8. The battery-powered welding-type power supply as defined in clause 1, wherein the mechanical connector comprises a slide-on connector.
Clause 9. The battery-powered welding-type power supply as defined in clause 1, wherein the external electrical connector comprises a plurality of individually replaceable electrical connectors.
Clause 10. The battery-powered welding-type power supply as defined in clause 1, wherein the external electrical connector is configured to block access to the internal electrical connector.
Clause 11. A removable battery pack, comprising:
   a housing;
   one or more energy storage cells within the housing and configured to store and discharge electrical energy;
   an internal electrical connector integrally coupled within the housing to the one or more energy storage cells;
   a mechanical connector on the housing and configured to removably attach the housing to a tool; and
   a removable external electrical connector configured to electrically couple the internal electrical connector to a corresponding tool electrical connector while the housing is attached to the tool.
Clause 12. The removable battery pack as defined in clause **11,** wherein the internal electrical connector and the external electrical connector are electrically coupled via at least one of: a first plurality of blade-and-slot connections; edge connectors; wire connectors; pin connectors; or a compression-type connection.
Clause 13. The removable battery pack as defined in clause 12, wherein the external electrical connector is configured to be coupled to the tool electrical connector via a second plurality of blade-and-slot connections.
Clause 14. The removable battery pack as defined in clause 13, wherein the first plurality of blade-and-slot connections have a same number of electrical connections as a second plurality of blade-and-slot connections.
Clause 15. The removable battery pack as defined in clause 13, wherein the first plurality of blade-and-slot connections have a different number of electrical connections than a second plurality of blade-and-slot connections.
Clause 16. The removable battery pack as defined in clause **11,** wherein the external electrical connector is attached to the housing via one or more fasteners.
Clause 17. The removable battery pack as defined in clause **11,** wherein the external electrical connector is attached to the housing via a toolless connection.
Clause 18. The removable battery pack as defined in clause **11,** wherein the mechanical connector comprises a slide-on connector.
Clause 19. The removable battery pack as defined in clause **11,** wherein the external electrical connector comprises a plurality of individually replaceable electrical connectors.
Clause 20. The removable battery pack as defined in clause **11,** wherein the external electrical connector is configured to block access to the internal electrical connector.

## Claims

1. A battery-powered welding-type power supply, comprising:
a housing;
power conversion circuitry within the housing and configured to convert input battery power to welding-type power; and
a battery connector on the housing and configured to electrically couple a battery to the power conversion circuitry, the battery connector comprising:
an internal electrical connector integrally coupled within the housing to the power conversion circuitry;
a mechanical connector on the housing and configured to removably attach the battery to the housing; and
a removable external electrical connector configured to electrically couple the internal electrical connector to a corresponding battery electrical connector while the battery is attached to the housing.

2. The battery-powered welding-type power supply as defined in claim 1, wherein the internal electrical connector and the external electrical connector are electrically coupled via a first plurality of blade-and-slot connections.

3. The battery-powered welding-type power supply as defined in claim 2, wherein the external electrical connector is configured to be coupled to the battery electrical connector via a second plurality of connections.

4. The battery-powered welding-type power supply as defined in claim 3, wherein the first plurality of blade-and-slot connections have a same number of electrical connections as a second plurality of connections or
wherein the first plurality of blade-and-slot connections have a different number of electrical connections than a second plurality of connections.

5. The battery-powered welding-type power supply as defined in claim 1, wherein the external electrical connector is attached to the housing via one or more fasteners or
wherein the external electrical connector is attached to the housing via a toolless connection or
wherein the mechanical connector comprises a slide-on connector or
wherein the external electrical connector comprises a plurality of individually replaceable electrical connectors or
wherein the external electrical connector is configured to block access to the internal electrical connector.

6. A removable battery pack, comprising:
a housing;
one or more energy storage cells within the housing and configured to store and discharge electrical energy;
an internal electrical connector integrally coupled within the housing to the one or more energy storage cells;
a mechanical connector on the housing and configured to removably attach the housing to a tool; and
a removable external electrical connector configured to electrically couple the internal electrical connector to a corresponding tool electrical connector while the housing is attached to the tool.

7. The removable battery pack as defined in claim 6, wherein the internal electrical connector and the external electrical connector are electrically coupled via at least one of: a first plurality of blade-and-slot connections; edge connectors; wire connectors; pin connectors; or a compression-type connection.

8. The removable battery pack as defined in claim 7, wherein the external electrical connector is configured to be coupled to the tool electrical connector via a second plurality of blade-and-slot connections.

9. The removable battery pack as defined in claim 8, wherein the first plurality of blade-and-slot connections have a same number of electrical connections as a second plurality of blade-and-slot connections.

10. The removable battery pack as defined in claim 8, wherein the first plurality of blade-and-slot connections have a different number of electrical connections than a second plurality of blade-and-slot connections.

11. The removable battery pack as defined in claim 6, wherein the external electrical connector is attached to the housing via one or more fasteners.

12. The removable battery pack as defined in claim 6, wherein the external electrical connector is attached to the housing via a toolless connection.

13. The removable battery pack as defined in claim 6, wherein the mechanical connector comprises a slide-on connector.

14. The removable battery pack as defined in claim 6, wherein the external electrical connector comprises a plurality of individually replaceable electrical connectors.

15. The removable battery pack as defined in claim 6, wherein the external electrical connector is configured to block access to the internal electrical connector.
